# EUROPÄISCHE PATENTSCHRIFT

(11) **EP 2 803 257 B1**
(45) Veröffentlichungstag und Bekanntmachung des Hinweises auf die Patenterteilung: **20.04.2016**
(21) Anmeldenummer: 14165615.7
(22) Anmeldetag: 23.04.2014
(51) Int. Cl.: A01D 41/14

(54) **Schneidwerk mit einem längenverstellbaren Schneidtisch**
Cutting system with a variable length cutting table
Barre de coupe avec tablier de coupe réglable en longueur

(30) Priorität: 15.05.2013 DE 102013208957
(43) Veröffentlichungstag der Anmeldung: 19.11.2014
(73) Patentinhaber: Deere & Company, Moline, IL 61265 (US)
(72) Erfinder: Meyer-Hamme, Friedrich, 31600 Uchte (DE); Weichholdt, Dirk, 57200 Woelfling les Sarreguemin (FR); Tamilarasan, Saravanan, 66482 Zweibrücken (DE); Peiter, Paulo R, 98920-000 Horizontina, RS (BR)
(74) Vertreter: Holst, Sönke

(56) Entgegenhaltungen:
- EP-A1- 0 250 649
- EP-A1- 2 436 257
- FR-A1- 2 813 492
- US-A1- 2005 115 217
- US-A1- 2011 005 184

## Beschreibung

Die Erfindung betrifft ein Schneidwerk mit einem längenverstellbaren Schneidtisch, umfassend einen in einer Vorwärtsrichtung über ein Feld bewegbaren Rahmen, an dem eine Haspel, eine Querförderschnecke und ein unterhalb der Querförderschnecke positionierter Trog befestigt sind, ein vorderes Schneidtischelement, dessen Position gegenüber dem Trog in Vorwärtsrichtung durch einen Aktor über einen Verstellweg verstellbar ist und das an seiner Vorderseite einen Mähwerksbalken trägt, und ein gegenüber dem Trog und gegenüber dem vorderen Schneidtischelement in Vorwärtsrichtung bewegbares Zwischenstück, das oberhalb des vorderen Schneidtischelements und des Trogs angeordnet ist und eine Brücke zwischen den vorderen Schneidtischelement und dem Trog bildet.

### Stand der Technik

Schneidwerke werden bei der Ernte landwirtschaftlich angebauter Pflanzen verwendet, um die Pflanzen abzuschneiden, zusammenzuführen und einer Erntemaschine zuzuführen, in der sie weiterverarbeitet werden, insbesondere gedroschen (Mähdrescher) oder gehäckselt (Feldhäcksler). Derartige Schneidwerke umfassen in der Regel einen vorderen Mähwerksbalken, um die Pflanzen abzuscheiden, eine über dem Mähwerksbalken angeordnete Haspel, um die oberen Teile der Pflanzen nach hinten zu raffen, und eine Querförderschnecke, die das Erntegut seitlich zusammenführt, um es durch eine hintere Öffnung in einer Rückwand des Schneidwerks einem Schrägförderer des Mähdreschers oder zur Erstellung von Ganzpflanzensilage einem Einzugskanal des Feldhäckslers zuzuführen. An den seitlichen Enden des Schneidwerks sind Seitenwände vorgesehen, zwischen denen sich der Mähwerksbalken und die Querförderschnecke erstrecken. Der Boden des Schneidwerks zwischen dem Mähwerksbalken und der Rückwand wird durch ein als Schneidtisch bezeichnetes Bodenblech gebildet.

Zur Anpassung an unterschiedliche Erntegutarten und somit Pflanzengrößen werden Schneidwerke mit längenverstellbaren Schneidtischen verwendet. Insbesondere zur Rapsernte wird der Schneidtisch nach vorn ausgezogen (und durch Seitenmesser ergänzt), während er bei der Ernte von niedrigeren bzw. nicht wie Raps ein dichtes Buschwerk bildenden Pflanzen, wie z.B. Weizen, demgegenüber nach hinten eingezogen wird.

Ein derartiges Schneidwerk zeigt die EP 0 250 649 A1, gemäß der eine vordere Schneidtischhälfte durch Hydraulikzylinder in Vorwärtsrichtung gegenüber einer rückwärtigen Schneidtischhälfte positionsverstellbar ist. Dazu ist ein flaches, vorderes Schneidtischelement, an dessen Vorderseite der Messerbalken befestigt ist, durch mittels Hydraulikzylinder teleskopierbarer Führungen am rückwärtigen Rahmenbereich des Schneidwerks befestigt und somit gegenüber einem unterhalb der Querförderschnecke angeordneten, rückwärtigen Trog in Vorwärtsrichtung verstellbar. Um eine Kante beim Übergang des Ernteguts vom vorderen Schneidtischelement auf den darüber angeordneten Trog zu vermeiden, ist das vordere Schneidtischelement mit einer Platte aus federndem Material verbunden, die sich nach hinten und je nach Position des vorderen Schneidtischelements mehr oder weniger weit über den Trog erstreckt. Dadurch ergibt sich nur am rückwärtigen Ende der Platte eine Kante, die aber nach unten abfällt und den Erntegutfluss nicht stört. Die Länge des Verstellbereichs des vorderen Schneidtischelements ist jedoch durch die Form und Abmessungen des Troges begrenzt.

Die WO 03/049532 A1 schlägt zur Verlängerung des Verstellbereichs des vorderen Schneidtischelements eines Schneidwerks vor, an der Vorderkante des rahmenfest angebrachten Trogs einen vorkragenden Abstreifer anzubringen, der an dem vorderen Schneidtischelement aufliegt und einen Übergang vom Schneidtischelement auf den Trog bildet. Auf diese Weise kann das vordere Schneidtischelement unterhalb des Troges angeordnet werden und durch den Abstreifer wird der Übergang des Ernteguts auf den Trog erleichtert. Alternativ wird in einer anderen Ausführungsform vorgeschlagen, dass das vordere, verschiebbare Schneidtischelement zwei einander übergreifende Bodenabschnitte umfasst, die mittels teleskopierbarer Führungsrohre jalousieartig gegeneinander und relativ zum Trog verschiebbar sind. Die zweitgenannte Lösung ist relativ aufwändig und bei der erstgenannten Lösung mit dem Abstreifer muss die Länge des vorderen Schneidtischelements wenigstens der Länge des Verstellbereichs entsprechen, sodass der Verstellbereich ebenfalls begrenzt ist.

Die als gattungsbildend angesehene DE 10 2010 046 862 A1 beschreibt ein weiteres Schneidwerk mit einer rahmenfesten Schneidwerksmulde und einem gegenüber der Schneidwerksmulde in Vorwärtsrichtung verschiebbaren Schneidtisch mit dem Mähwerk. Ein Übergangsblech ist zwischen dem Schneidtisch und der Schneidwerksmulde angeordnet, um eine bei der Verstellung des Schneidtisches gegenüber der Schneidwerksmulde entstehende Lücke zu überbrücken. Die Verstellung des Übergangsblechs erfolgt durch Federn, die das an einem Anschlag des Schneidtisches anliegende Übergangsblech nach vorn hin vorspannen. Wird somit der Schneidtisch nach vorn verstellt, folgt das Übergangsblech seiner Bewegung. Analog schiebt der Anschlag des Schneidtischs das Übergangsblech gegen die Kraft der Feder nach hinten, wenn der Schneidtisch wieder nach hinten eingezogen wird. Diese Lösung leidet unter dem Nachteil, dass das Übergangsblech verkantet, wenn die Verschiebebewegung des Schneidtisches nicht exakt parallel zur Schneidwerksmulde erfolgt.

Die nachveröffentlichte DE 10 2012 204 869 A1 beschreibt ein Schneidwerk, das ebenfalls eine rahmenfeste Schneidwerksmulde, einen verstellbaren Schneidtisch und ein Zwischenstück aufweist, das unabhängig vom Schneidtisch in Vorwärtsrichtung bewegbar ist. Es wird durch Federkraft nach hinten vorgespannt und mittels am Schneidtisch angebrachter Mitnehmer nach vorn gezogen, wenn der Schneidtisch den vorderen Teil seines Verstellbereichs erreicht hat. Hier ergeben sich ähnliche Nachteile wie bei DE 10 2010 046 862 A1.

### Problem

Die der Erfindung zu Grunde liegende Aufgabe wird darin gesehen, ein Schneidwerk mit einem längenverstellbaren Schneidtisch bereitzustellen, das die bezüglich des Standes der Technik erwähnten Nachteile nicht oder in einem verminderten Maße aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Schneidwerk mit einem längenverstellbaren Schneidtisch umfasst einen in einer Vorwärtsrichtung über ein Feld bewegbaren Rahmen, an dem eine Haspel, eine Querförderschnecke und ein unterhalb der Querförderschnecke positionierter Trog befestigt sind. Ein vorderes Schneidtischelement ist gegenüber dem Trog in Vorwärtsrichtung durch einen Aktor über einen Verstellweg verstellbar und trägt an seiner Vorderseite einen Mähwerksbalken trägt. Ein Zwischenstück ist gegenüber dem Trog und gegenüber dem vorderen Schneidtischelement in Vorwärtsrichtung bewegbar und oberhalb des vorderen Schneidtischelements und des Trogs angeordnet, um eine Brücke zwischen den vorderen Schneidtischelement und dem Trog zu bilden. Das Zwischenstück ist mit einer um ihre Längsachse drehbaren, sich in Querrichtung erstreckenden Welle gekoppelt, die ihrerseits antriebsmäßig mit dem Aktor gekoppelt ist.

Auf diese Weise erzielt man einen relativ großen Verstellweg, denn das Zwischenstück ermöglicht es, den Verstellweg größer als die Länge des Troges zu wählen. Die zum Bewegen des Zwischenstücks dienende Welle sorgt für einen über dessen Breite gleichmäßigen Antrieb und vermeidet die im Stand der Technik auftretenden Probleme des Verkantens.

Die Welle ist vorzugsweise durch eine oder mehrere Federn in eine Ruhelage vorgespannt ist, aus der sie durch den Aktor bewegbar ist. Die Ruhelage der Welle entspricht vorzugsweise einer vorderen Position des Zwischenstücks. Es wäre aber auch denkbar, die Welle durch die Feder in eine rückwärtige Position des Zwischenstücks vorzugspannen.

Die Kopplung der Bewegung des Aktors an die Welle erfolgt insbesondere durch ein Kontrollelement, das durch eine Totgangkupplung mit einem vom Aktor bewegten Bauteil antriebsverbunden ist. Bei dem erwähnten Bauteil kann es sich um ein beliebiges, vom Aktor bewegtes Bauteil des Schneidwerks handeln, z.B. um einen Bereich des Schneidtisches oder ein daran befestigtes Element oder direkt um die Zylinderstange eines als Aktor dienenden Hydraulikzylinders oder ein daran befestigtes Element. Die Kopplung zwischen dem Bauteil und dem Kontrollelement erfolgt vorzugsweise durch die Totgangkupplung, da der Verstellweg des Zwischenstücks kleiner ist als der Verstellweg des Aktors. Die Totgangkupplung kann beispielsweise in der Weise realisiert werden, dass das Kontrollelement an einem vom Aktor bewegten Bauteil in Anlage bringbar ist und nur über einen Teil des Verstellbereichs des Bauteils dessen Bewegung folgt. Hierzu kann beispielsweise ein Langloch im Bauteil dienen, in welches das Kontrollelement eingreift, oder es wird ein Teleskoprohr verwendet. Es wäre auch denkbar, eine Untersetzung zwischen der Bewegung des Aktors und des Zwischenelements vorzusehen, z.B. durch unterschiedliche Hebelarme, unter denen das Zwischenelement und das Kontrollelement an der Welle angreifen, um den kleineren Verstellweg des Zwischenstücks gegenüber dem Verstellweg des Aktors zu realisieren. Hierbei könnte ggf. sogar auf die Totgangkupplung und die Feder verzichtet werden.

Das Schneidwerk kann an beliebigen selbstfahrenden Erntemaschinen, wie Mähdreschern oder Feldhäckslern verwendet werden.

### Ausführungsbeispiele

In den Zeichnungen sind drei nachfolgend näher beschriebene Ausführungsbeispiele der Erfindung dargestellt. Es zeigt:
- Fig. 1: einen vertikalen Schnitt durch ein erfindungsgemäßes Schneidwerk in Querrichtung zur Vorwärtsrichtung bei eingezogenem Schneidtisch,
- Fig. 2: eine vergrößerte Ansicht der Figur 1,
- Fig. 3: das Schneidwerk der Figur 1 bei teilweise ausgezogenem Schneidtisch,
- Fig. 4: das Schneidwerk der Figur 1 bei vollständig ausgezogenem Schneidtisch,
- Fig. 5: einen vertikalen Schnitt durch eine zweite Ausführungsform eines erfindungsgemäßen Schneidwerks analog der Figur 2, und
- Fig. 6: einen vertikalen Schnitt durch eine zweite Ausführungsform eines erfindungsgemäßen Schneidwerks analog der Figur 2.

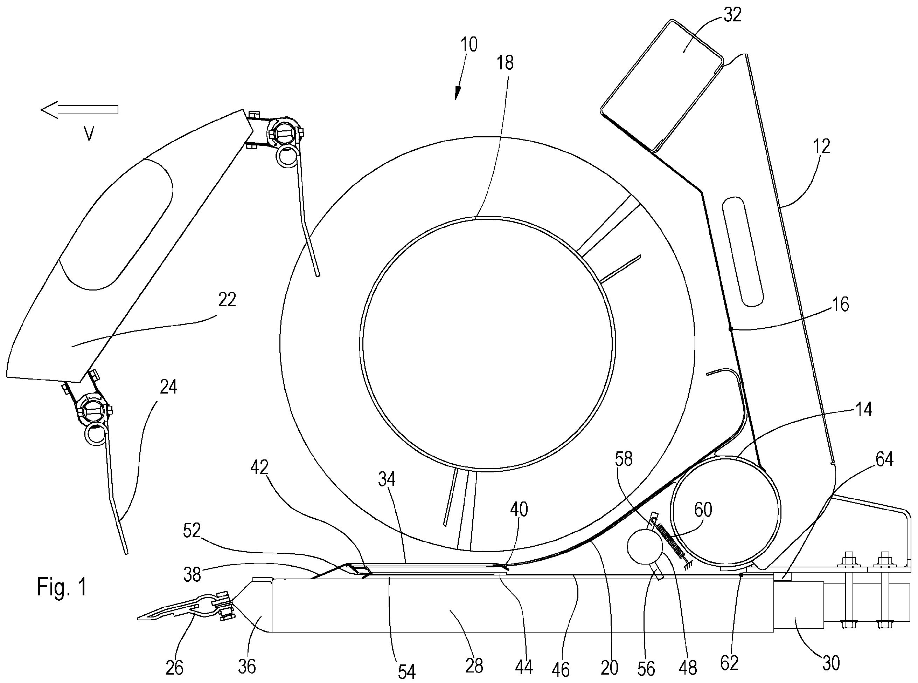

Die Figur 1 zeigt einen Schnitt durch ein erfindungsgemäßes Schneidwerk 10 mit einem längenverstellbaren Schneidtisch, wobei sich die Zeichenebene vertikal und quer zur normalen Vorwärtsrichtung V erstreckt, in welche das Schneidwerk 10 beim Erntebetrieb durch eine selbstfahrende Erntemaschine (nicht gezeigt) bewegt wird, beispielsweise durch einen Mähdrescher oder Feldhäcksler. Das Schneidwerk 10 baut sich auf einem Rahmen 12 auf, der ein tragendes Querrohr 14, eine Rückwand 16 und nicht gezeigte Seitenwände umfasst. Im Folgenden beziehen sich Richtungsangaben, wie vorn und hinten, auf die Vorwärtsrichtung V.

Am Rahmen 12 ist eine sich horizontal und quer zur Vorwärtsrichtung V erstreckende, um ihre Längsachse in Drehung versetzbare Querförderschnecke 18 angebracht, unterhalb der ein rahmenfester Trog 20 angeordnet ist. Vor und oberhalb der Querförderschnecke 18 ist eine Haspel 22 angeordnet, deren vertikale und horizontale Position durch Aktoren (nicht gezeigt) verstellbar ist und deren Zinken 24 im Erntebetrieb das auf dem Feld stehende oder liegende Erntegut ergreifen und nach hinten bewegen, damit es durch einen Mähwerksbalken 26 von den im Boden verbleibenden Wurzeln abgeschnitten werden kann. Ein oberer Querträger 32 dient zur Aufhängung des Schneidwerks 10 an einem Schrägförderer (nicht gezeigt) des Mähdreschers oder Einzugskanal des Feldhäckslers. Das vom Mähwerksbalken 26 abgeschnittene Erntegut wird durch die Querförderschnecke 18 zur Mitte des Schneidwerks 10 gefördert, wo es durch eine Öffnung in der Rückwand 16 an den Schrägförderer oder Einzugskanal übergeben wird.

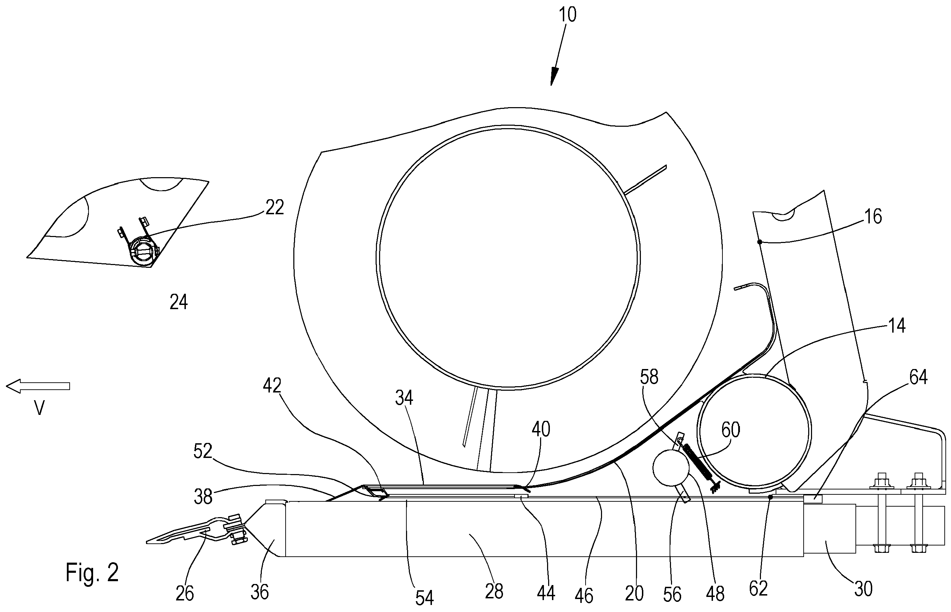

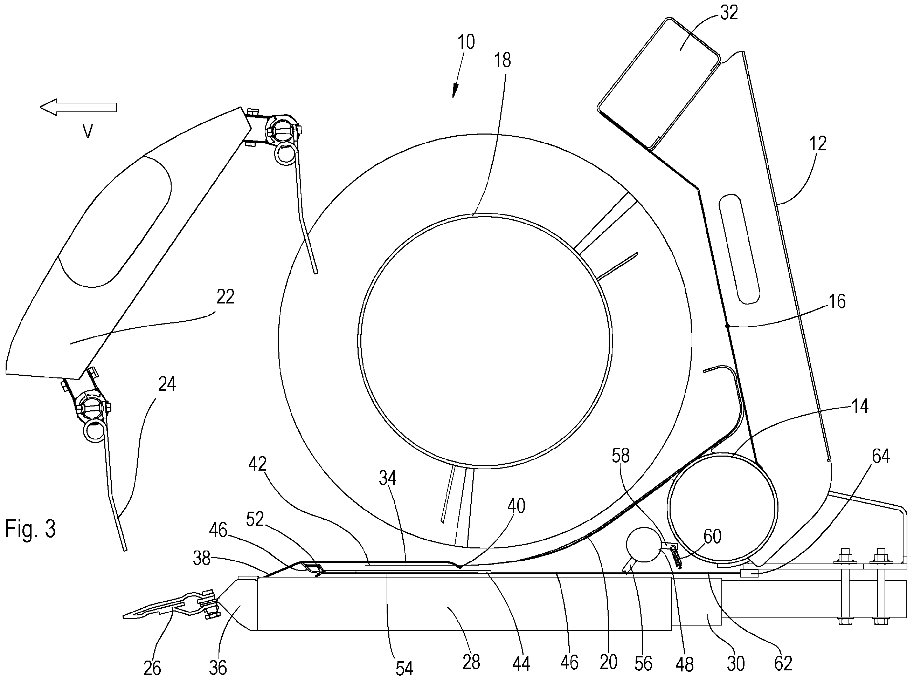

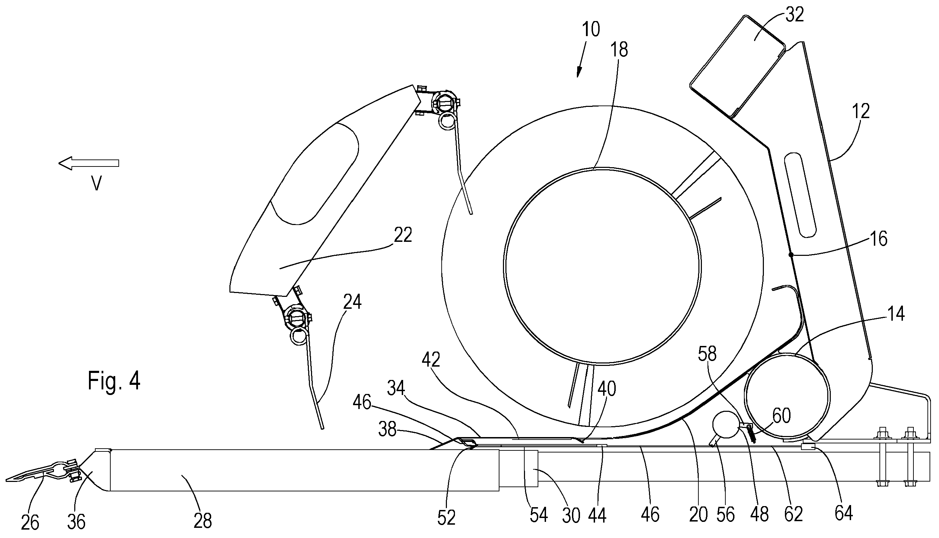

Der Mähwerksbalken 26 ist an der Vorderseite eines vorderen Schneidtischelements 28 angebracht, das durch einen Endes am rückwärtigen Ende des Rahmens 12 und anderen Endes am vordereren Schneidtischelement 28 festgelegte Aktoren 30 in Form von Hydraulikzylindern in Vorwärtsrichtung verschoben werden kann, um die Schneidtischlänge an die Art des jeweils zu erntenden Ernteguts anzupassen. Das vordere Ende des vorderen Schneidtischelements 28 ist durch eine Halterung 36 mit dem Mähwerksbalken 26 verbunden. Insbesondere bei der Rapsernte wird der Schneidtisch durch die Aktoren 30 nach vorn ausgezogen und der Mähwerksbalken 26 durch seitliche Trennmesser (nicht gezeigt) ergänzt. Die Seitenwände des Schneidwerks 10 sind gemeinsam mit dem durch das vordere Schneidtischelement 28, den Trog 20 und ein Zwischenstück 34 gebildeten Schneidtisch in an sich bekannter Weise ausziehbar gestaltet.
Das Zwischenstück 34 erstreckt sich, wie am Besten in der Figur 2 erkennbar ist, in Vorwärtsrichtung V zwischen dem ersten Schneidtischelement 28 und dem Trog 20. Bei der in den Figuren 1 und 2 gezeigten, eingezogenen Stellung des Schneidtischs befindet sich das vordere Ende des Zwischenstücks 34 in der Nähe des vorderen Endes des vorderen Schneidtischelements 28. Das vordere Ende des Zwischenstücks 34 wird durch eine nach hinten und oben ansteigende Rampe 38 gebildet, die auf dem vorderen Schneidtischelement 34 aufliegt und einen störungsfreien Übergang des Ernteguts vom ersten Schneidtischelement 28 auf das Zwischenstück 34 ermöglicht. Am rückwärtigen Ende des Zwischenstücks 34 ist eine nach hinten und unten absinkende Kante 40 vorgesehen, hinter und unter welcher sich der Trog 20 anschließt.
Der Trog 20 hat einen horizontalen, sich nach vorn unter das Zwischenstück 34 und dort in der Stellung nach Figur 1 und 2 bis vor die Mitte des Zwischenstücks 34 erstreckenden Fortsatz 42. Unterhalb des Übergangs zwischen Trog 20 und Fortsatz 42, über dem sich in den Figuren 1 und 2 die rückwärtige Kante 40 des Zwischenstücks 34 befindet, ist eine Führung 44 mit dem Trog 20 und/oder Fortsatz 42 fest verbunden. Die Führung 44 umfasst horizontale, sich in Vorwärtsrichtung V erstreckende Öffnungen, durch die sich ein langgestreckter Stab 46 erstreckt, der mit seinem vorderen Ende unterhalb des rückwärtigen Endes der Rampe 38 am Zwischenstück 34 und mit seinem rückwärtigen Ende an einem Hebel 56 befestigt ist, der seinerseits an einer sich quer erstreckenden, um ihre Längsachse drehbar gelagerten Welle 48 befestigt ist. Der Stab 46 kann aus federndem Material sein, um das Zwischenstück 34 nach unten hin vorzuspannen, damit es fest von oben her auf dem vorderen Schneidtischelement 28 und auf dem Trog 20 aufliegt. Die Welle 48 ist mit einem weiteren Hebel 58 verbunden, an dem eine Feder 60 befestigt ist, die mit ihrem anderen, unteren Ende am Rahmen 12 festgelegt ist. Die Feder 60 ist eine Zugfeder und spannt die Welle 48 im Uhrzeigersinn vor, d.h. die Feder 60 spannt das Zwischenstück 34 über den Hebel 58, die Welle 48, den Hebel 56 und den Stab 46 nach vorn vor. Der Hebel 56 (oder ein anderer mit der Welle 48 verbundener, nicht eingezeichneter Hebel) ist über ein Verbindungsblech 62 mit einem Kontrollelement 64 verbunden, das an einem vom Aktor 30 bewegten Bauteil anliegt, bei dem es sich hier um die Rückseite des Schneidtischelements 28 handelt. Das Kontrollelement 64 sorgt in der in Figur 1 und 2 gezeigten Stellung des Schneidtischelements 28 dafür, dass sich das Zwischenstück 34 in seiner rückwärtigen Position befindet. Die Rückseite des Schneidtischelements 28 und das Kontrollelement 64 bilden hier eine Totgangkupplung, die nur einen Teil des Bewegungsbereichs des Aktors 30 auf die Welle 48 überträgt, da der Verstellweg des Zwischenstücks 34 kleiner als der des Aktors 30 ist.
Weiterhin ist das vordere Ende des Fortsatzes 42 mit einer sich schräg nach vorn und unten erstreckenden Wand 52 verbunden, an die sich wiederum unterhalb des Fortsatzes 42 ein sich horizontal nach hinten erstreckendes Blech 54 anschließt (vgl. auch die Figuren 3 und 4), das sich bis etwa zum vorderen Ende der Feder 60 nach hinten erstreckt und bei eingezogenem Schneidtisch auf dem vorderen Schneidtischelement 28 aufliegt. Der Stab 46 erstreckt sich durch eine geeignete Öffnung in der Wand 52 hindurch und ist somit gegenüber der Wand 52 verschiebbar. Die Unterseite der Führung 44 ist mit der Oberseite des Blechs 54 verbunden.
Es sei angemerkt, dass über die Breite des Schneidwerks 10 mehrere Aktoren 30, Führungen 44 und Stäbe 46 verteilt sind. Während die Welle 48 nur einfach vorhanden ist, können ein oder mehrere weitere Hebel 58 und Federn 60 vorgesehen sein. Analog können nur ein einziges Verbindungsblech 62 und ein einziges Kontrollelement 64 vorgesehen sein oder mehrere davon über die Breite des Schneidwerks 10 verteilt werden. Weiterhin erstrecken sich die Haspel 22, die Querförderschnecke 18, der Mähwerksbalken 26, das vordere Schneidtischelement 28, das Zwischenstück 34 und der Trog 20 in der Regel über die gesamte Breite des Schneidwerks 10. Zur Gewichtsverminderung kann das vordere Schneidtischelement 28 aus einer Hülle aus Metall (Stahlblech) und einen Kern aus aufgeschäumtem Kunststoff aufgebaut sein. Das Schneidwerk 10 ist in der dargestellten Ausführungsform in sich starr gestaltet, obwohl es auch mit einem in sich flexiblen Schneidtisch ausgestattet werden könnte.
Nach alledem ergibt sich die in den Figuren 1 bis 4 dargestellte Positionierung und Funktion des Zwischenstücks 34:
Wenn das vordere Schneidtischelement 28 sich in seiner rückwärtigen Position befindet, wie in den Figuren 1 und 2 gezeigt, ist auch das Zwischenstück 34 in seiner dort gezeigten,
rückwärtigen Position und bildet dort eine Brücke zwischen dem vorderen Schneidtischelement 28 und dem Trog 20. Dorthin wird es gegen die Kraft der Feder 60 durch das Kontrollelement 64 gezogen.

Wird das vordere Schneidtischelement 28 durch eine Betätigung des Aktors 30, die aus der Kabine der Erntemaschine bewerkstelligt werden kann, nach vorn verschoben, folgt das Zwischenstück 34 der Bewegung des vorderen Schneidtischelements 28, da das Kontrollelement 64 nicht mehr durch das vordere Schneidtischelement 28 in seiner rückwärtigen Position gehalten wird. Über einen rückwärtigen Teil des Verstellwegs des vorderen Schneidtischelements 28, der sich zwischen den in Figur 1 und Figur 3 gezeigten Positionen erstreckt, bewegt sich das Zwischenstück 34 somit in derselben Weise gegenüber dem Rahmen 12 wie das vordere Schneidtischelement 28. Es findet dabei keine relative Bewegung zwischen der Rampe 38 und dem in sich oberseitig flachen, vorderen Schneidtischelement 28 statt. Wird das vordere Schneidtischelement 28 durch den Aktor 30 wieder aus der Position der Figur 3 nach hinten bewegt, zieht das Kontrollelement 64 das Zwischenstück 34 ebenfalls wieder nach hinten, bis die Stellung nach Figur 1 erreicht wird.

Wird das vordere Schneidtischelement 28 hingegen über die in Figur 3 gezeigte Position hinaus nach vorn in den vorderen Teil seines Verstellwegs verschoben, wie in der Figur 4 dargestellt, bleibt das Zwischenstück 34 in seiner vorderen Position. Dann findet eine Relativbewegung zwischen dem Zwischenstück 34 und dem vorderen Schneidtischelement 28 statt, aber keine Relativbewegung zwischen dem Trog 20 bzw. dessen Fortsatz 42 einerseits (und somit dem Rahmen 12), auf dem die rückwärtige Kante 40 des Zwischenstücks 34 aufliegt, und dem Zwischenstück 34 andererseits.

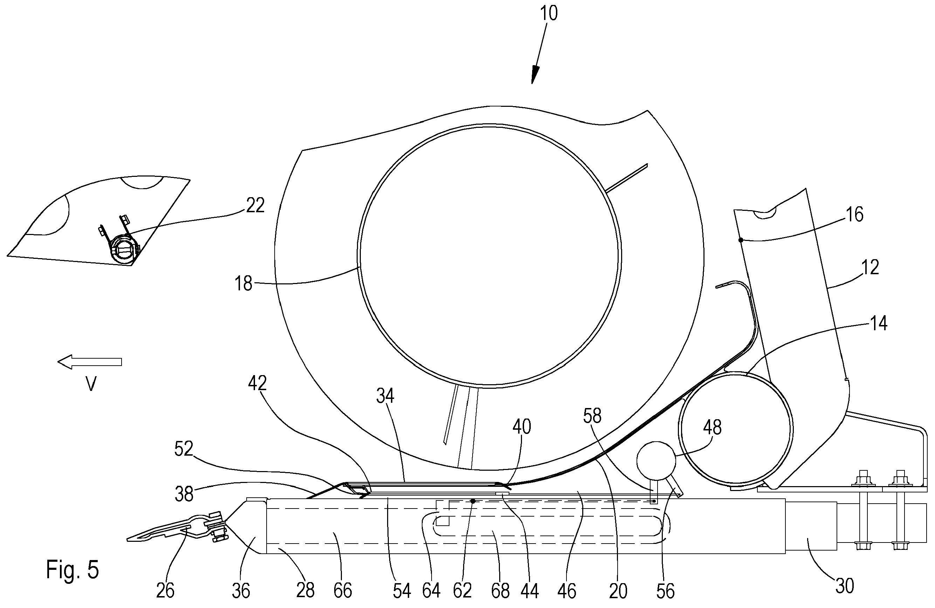

In der Figur 5 ist eine zweite Ausführungsform eines Schneidwerks 10 dargestellt. Mit der ersten Ausführungsform übereinstimmende Elemente sind mit übereinstimmenden Bezugszeichen gekennzeichnet. Bei dieser Ausführungsform ist die Welle 48 über einen weiteren, starr an der Welle 48 angebrachten Hebel 58 um eine sich in Querrichtung erstreckende Achse schwenkbar mit dem Verbindungsblech 62 verbunden, das sich unterhalb der Oberkante des Schneidtischelements 28 nach vorn erstreckt und an seinem vorderen Ende mit dem Kontrollelement 64 verbunden ist, das in ein sich in Vorwärtsrichtung erstreckendes Langloch 68 eines an der Halterung 36 oder direkt an der Zylinderstange des Aktors 30 befestigten Blechs 66 eingreift. Die Länge des Langlochs 68 entspricht dem Verstellweg des Schneidtischelements 28 minus dem Bewegungsbereich des Zwischenelements 34 (ggf. um das Übersetzungsverhältnis der Hebel 56, 58 korrigiert). Eine Feder zur Vorspannung der Welle 48 ist nicht vorgesehen, könnte aber vorgesehen werden, um das Zwischenelement 34 insbesondere nach hinten vorzuspannen.
Die Wirkungsweise der zweiten Ausführungsform ist mit jener der ersten Ausführungsform ähnlich: wird das Schneidtischelement 28 durch den Aktor 30 aus der in Figur 5 dargestellten Position nach vorn verschoben, bleibt das Zwischenelement 34 zunächst gegenüber dem Rahmen 12 stationär, bis das Kontrollelement 64 am hinteren Ende des Langlochs 68 anliegt und ab dann (und mit ihm das Zwischenelement 34) über die Welle 48 durch das Blech 66 nach vorn verschoben wird, bis die Position gemäß Figur 4 erreicht ist. Beim Einziehen des Schneidtischelements 28 bleibt das Zwischenelement 34 wieder zunächst stationär (oder es wird durch das anströmende Erntegut und/oder eine nicht gezeigte Feder nach hinten verschoben), bis das Kontrollelement 64 am vorderen Ende des Langlochs 68 anliegt und ab dann (und mit ihm über die Welle 48 das Zwischenelement 34) durch das Blech 66 nach hinten verschoben wird, bis die Position gemäß Figur 2 erreicht ist. Das Langloch 68 und das Kontrollelement 64 realisieren bei dieser Ausführungsform eine Totgangkupplung, die nur einen Teil des Verstellwegs des Aktors 30 auf das Zwischenelement 34 überträgt. Das Blech 66, das Kontrollelement 64, das Verbindungsblech 62 und der weitere Hebel 58 können sich an einem oder beiden seitlichen Enden des Schneidwerks 10 befinden.

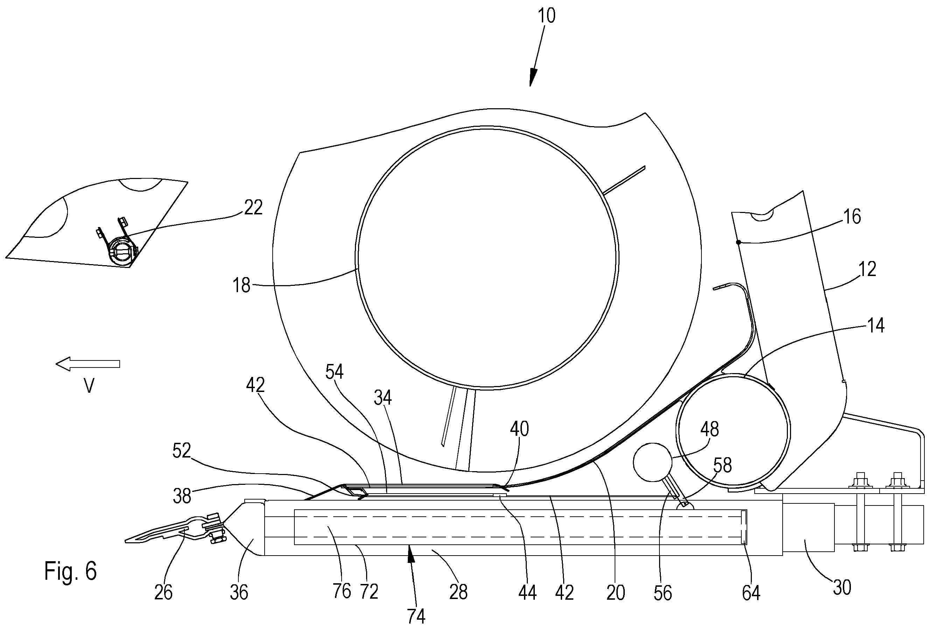

In der Figur 6 ist eine dritte Ausführungsform eines Schneidwerks 10 dargestellt. Mit der ersten Ausführungsform übereinstimmende Elemente sind mit übereinstimmenden Bezugszeichen gekennzeichnet. Bei dieser Ausführungsform ist die Welle 48 über einen weiteren, starr an der Welle 48 angebrachten Hebel 58 um eine sich in Querrichtung erstreckende Achse schwenkbar mit einer Konsole verbunden, die an einem Gehäuse 72 eines Teleskoprohrs 74 angebracht ist, das sich unterhalb der Oberkante des Schneidtischelements 28 nach vorn erstreckt. Im Inneren des Teleskoprohrs 74 ist eine Stange 76 angeordnet, die sich nach vorne aus dem Gehäuse 72 erstreckt und an ihrem vorderen Ende an der Halterung 36 oder direkt an der Zylinderstange des Aktors 30 befestigt ist. Hier dient ein Bodenblech der Stange 76 als Kontrollelement 64, das bei ausgezogener Stange 76 am vorderen Ende des Gehäuses 72 anschlägt und bei eingezogener Stange 76 am Boden des Gehäuses 72 anschlägt. Die Länge des Gehäuses 72 des Teleskoprohrs 74 entspricht dem Verstellweg des Schneidtischelements 28 minus dem Bewegungsbereich des Zwischenelements 34 (ggf. um das Übersetzungsverhältnis der Hebel 56, 58 korrigiert). Eine Feder zur Vorspannung der Welle 48 ist nicht vorgesehen, könnte aber vorgesehen werden, um das Zwischenelement 34 insbesondere nach hinten vorzuspannen.

Die Wirkungsweise der dritten Ausführungsform ist mit jener der zweiten Ausführungsform vergleichbar: wird das Schneidtischelement 28 durch den Aktor 30 aus der in Figur 6 dargestellten Position nach vorn verschoben, bewegt sich die Stange 76 mit nach vorn. Das Zwischenelement 34 bleibt zunächst gegenüber dem Rahmen 12 stationär, bis das Kontrollelement 64 am vorderen Ende des Gehäuses 72 anliegt. Bei einer weiteren Bewegung des Schneidtischelements 28 nach vorn wird das Zwischenelement 34 durch die Stange 76, das Kontrollelement 64, das Gehäuse 72, den Hebel 58, die Welle 48, den Hebel 56 und den Stab 46 nach vorn verschoben, bis die Position gemäß Figur 4 erreicht ist. Beim Einziehen des Schneidtischelements 28 bleibt das Zwischenelement 34 wieder zunächst stationär (oder es wird durch das anströmende Erntegut und/oder eine nicht gezeigte Feder nach hinten verschoben), bis das Kontrollelement 64 am Boden des Gehäuses 72 anliegt und ab dann auch das Gehäuse 72 nach hinten verschoben wird, bis die Position gemäß Figur 2 erreicht ist. Das Teleskoprohr 74 und die Stange 76 realisieren bei dieser Ausführungsform eine Totgangkupplung, die nur einen Teil des Verstellwegs des Aktors 30 auf das Zwischenelement 34 überträgt. Das Teleskoprohr 74 mit der Stange 76 und der weitere Hebel 58 können sich an einem oder beiden seitlichen Enden des Schneidwerks 10 befinden.

Durch die Verwendung des nur über den rückwärtigen (oder gemäß Figur 5 und 6 vorderen) Teil des Verstellwegs des vorderen Schneidtischelements 28 in Vorwärtsrichtung verstellbaren Zwischenstücks 34 erreicht man, dass das vordere Schneidtischelement 28 in Vorwärtsrichtung kürzer als der Verstellweg gestaltet werden kann. Dadurch kann bei einer gegebenen, kürzesten Schneidtischlänge der Verstellweg vergrößert und/oder das vordere Schneidtischelement 28 kürzer und leichter gestaltet werden. Die Welle 48 ermöglicht die Verstellbewegung des Zwischenstücks 34 ohne Gefahr eines Verkantens.

## Patentansprüche

1. Schneidwerk (10) mit einem längenverstellbaren Schneidtisch, umfassend einen in einer Vorwärtsrichtung (V) über ein Feld bewegbaren Rahmen (12), an dem eine Haspel (22), eine Querförderschnecke (18) und ein unterhalb der Querförderschnecke (18) positionierter Trog (20) befestigt sind, ein vorderes Schneidtischelement (28), dessen Position gegenüber dem Trog (20) in Vorwärtsrichtung (V) durch einen Aktor (30) über einen Verstellweg verstellbar ist und das an seiner Vorderseite einen Mähwerksbalken (26) trägt, und ein gegenüber dem Trog (20) und gegenüber dem vorderen Schneidtischelement (28) in Vorwärtsrichtung bewegbares Zwischenstück (34), das oberhalb des vorderen Schneidtischelements (28) und des Trogs (20) angeordnet ist und eine Brücke zwischen den vorderen Schneidtischelement (28) und dem Trog (20) bildet, **dadurch gekennzeichnet, dass** das Zwischenstück (34) mit einer um ihre Längsachse drehbaren, sich in Querrichtung erstreckenden Welle (48) gekoppelt ist, die ihrerseits antriebsmäßig mit dem Aktor (30) gekoppelt ist.

2. Schneidwerk (10) nach Anspruch 1, wobei die Welle (48) durch eine oder mehrere Federn (60) in eine Ruhelage vorgespannt ist, aus der sie durch den Aktor (30) bewegbar ist.

3. Schneidwerk (10) nach Anspruch 2, wobei die Ruhelage der Welle (48) einer vorderen oder rückwärtigen Position des Zwischenstücks (34) entspricht.

4. Schneidwerk (10) nach einem der Ansprüche 1 bis 3, wobei die Welle durch ein Kontrollelement (64), das durch eine Totgangkupplung und/oder einen Untersetzungsmechanismus mit einem vom Aktor (30) bewegten Bauteil antriebsverbunden ist, antriebsmäßig mit dem Aktor (30) gekoppelt ist.

5. Schneidwerk (10) nach Anspruch 4, wobei die Totgangkupplung durch ein Teleskoprohr (72) oder ein Blech (66) mit einem Langloch (68) realisiert ist.

6. Selbstfahrende Erntemaschine, insbesondere Mähdrescher, mit einem Schneidwerk (10) nach einem der vorhergehenden Ansprüche.

## Claims

1. Cutting system (10) with a variable length cutting table, comprising a frame (12) which is moveable in a forwards direction (V) over a field and to which a reel (22), a transverse conveyor worm (18) and a trough (20) positioned below the transverse conveyor worm (18) are fastened, a front cutting table element (28), the position of which is adjustable in relation to the trough (20) over an adjustment path in the forwards direction (V) by means of an actuator (30) and which, on the front side thereof, bears a cutter bar (26), an intermediate piece (34) which is moveable in the forwards direction in relation to the trough (20) and in relation to the front cutting table element (28) and is arranged above the front cutting table element (28) and the trough (20) and forms a bridge between the front cutting table element (28) and the trough (20), **characterized in that** the intermediate piece (34) is coupled to a shaft (48) which is rotatable about the longitudinal axis thereof, extends in the transverse direction and, for its part, is coupled in terms of drive to the actuator (30).

2. Cutting system (10) according to Claim 1, wherein the shaft (48) is prestressed by one or more springs (60) into an inoperative position, out of which the shaft is moveable by the actuator (30).

3. Cutting system (10) according to Claim 2, wherein the inoperative position of the shaft (48) corresponds to a front or rear position of the intermediate piece (34).

4. Cutting system (10) according to one of Claims 1 to 3, wherein the shaft is coupled in terms of drive to the actuator (30) by a control element (64) which is drive-connected by a dead centre coupling and/or a step-down mechanism to a component moved by the actuator (30).

5. Cutting system (10) according to Claim 4, wherein the dead centre coupling is realized by a telescopic tube (72) or a plate (66) with an elongated hole (68).

6. Self-propelling harvesting machine, in particular combine harvester, with a cutting system (10) according to one of the preceding claims.

## Revendications

1. Appareil de coupe (10) avec un tablier de coupe réglable en longueur, comprenant un cadre (12) déplaçable sur un champ dans une direction d'avance (V), sur lequel cadre sont fixés un treuil (22), une vis transporteuse transversale (18) et une auge (20) positionnée sous la vis transporteuse transversale (18), un élément de tablier de coupe avant (28), dont la position par rapport à l'auge (20) peut être réglée sur une course de déplacement dans la direction d'avance (V) par un actionneur (30) et qui porte sur son côté avant une barre de coupe (26), et un élément intermédiaire (34) déplaçable dans la direction d'avance par rapport à l'auge (20) et par rapport à l'élément de tablier de coupe avant (28), lequel élément intermédiaire est disposé au dessus de l'élément de tablier de coupe avant (28) et au-dessus de l'auge (20) et forme un pont entre l'élément de tablier de coupe avant (28) et l'auge (20), **caractérisé en ce que** l'élément intermédiaire (34) est accouplé à un arbre (48) s'étendant dans la direction transversale, pouvant tourner autour de son axe longitudinal, et lui-même accouplé par entraînement à l'actionneur (30).

2. Appareil de coupe (10) selon la revendication 1, dans lequel l'arbre (48) est précontraint par un ou plusieurs ressorts (60) dans une position de repos depuis laquelle il est déplaçable par l'actionneur (30).

3. Appareil de coupe (10) selon la revendication 2, dans lequel la position de repos de l'arbre (48) correspond à une position avant ou arrière de l'élément intermédiaire (34).

4. Appareil de coupe (10) selon l'une quelconque des revendications 1 à 3, dans lequel l'arbre est accouplé par entraînement à l'actionneur (30) par un élément de contrôle (64) qui est connecté par entraînement par un accouplement à course morte et/ou un mécanisme de démultiplication à un composant déplacé par l'actionneur (30).

5. Appareil de coupe (10) selon la revendication 4, dans lequel l'accouplement à course morte est réalisé par un tube télescopique (72) ou une tôle (66) avec un trou oblong (68).

6. Moissonneuse automotrice, en particulier moissonneuse-batteuse, comprenant un appareil de coupe (10) selon l'une quelconque des revendications précédentes.
